(19) **Europäisches Patentamt**

**European Patent Office**

**Office européen des brevets**

(11) **EP 0 571 256 B1**

(12) **FASCICULE DE BREVET EUROPEEN**

(45) Date de publication et mention
de la délivrance du brevet:
**04.09.1996 Bulletin 1996/36**

(51) Int. Cl.$^6$: **B64G 3/00**, B64G 1/34,
G01S 17/02

(21) Numéro de dépôt: **93401252.7**

(22) Date de dépôt: **14.05.1993**

(54) **Satellite géodésique de faible masse à rétroréflecteur à correction d'aberration de vitesse**

Kleinmassiger, geodetischer Satellit mit Geschwindigkeitsaberrationskorrektur für Retroreflektor

Low-mass surveying satellite having a retroreflector assembly with speed aberration correction

(84) Etats contractants désignés:
**DE FR GB IT**

(30) Priorité: **18.05.1992 FR 9205989**

(43) Date de publication de la demande:
**24.11.1993 Bulletin 1993/47**

(73) Titulaire: **AEROSPATIALE Société Nationale
Industrielle
F-75781 Paris Cédex 16 (FR)**

(72) Inventeurs:
• **Lund, Glenn
F-06440 Peillon (FR)**
• **Lemuet, Sylvain
F-06150 Cannes La Bocca (FR)**

(74) Mandataire: **Rinuy, Santarelli
14, avenue de la Grande Armée
75017 Paris (FR)**

(56) Documents cités:
**FR-A- 2 674 637**

• **NASA REPORT X-524-63-59 13 Février 1959,
PLOTKIN, H.H. 'THE S-66 LASER SATELLITE
TRACKING EXPERIMENT'**
• **IEEE TRANSACTIONS ON GEOSCIENCE AND
REMOTE SENSING vol. GE-23, no. 4, Juillet
1985, New York(USA) pages 398 - 413 J.J.
DEGNAN ' SATELLITE LASER RANGING:
CURRENT STATUS AND FUTURE PROSPECTS'**
• **RAUMFAHRTFORSCHUNG vol. 13, no. 5,
Octobre 1969, OTTOBRUNN DE pages 228 - 235
HELBIG, H.S. ET AL. 'SATELLITENORTNUNG
MIT LASER'**
• **LA RECHERCHE SPATIALE vol. 10, no. 5,
Octobre 1971, pages 15 - 18 A. ORSZAG
'TELEMETRIE LASER TERRE-LUNE'**

## Description

L'invention concerne un satellite, de préférence de faible masse (inférieure typiquement à 500 kg, voire inférieure à 100 kg, selon que l'on se place dans la catégorie des minisatellites ou celle des microsatellites) pour la télémétrie laser à grande distance (en anglais "long range laser ranging"), c'est-à-dire la mesure précise de l'écartement de deux points très éloignés l'un de l'autre. Pour ce faire, il est connu de disposer un ensemble émetteur-récepteur laser en l'un de ces points et une cible rétroréflectrice en l'autre point : la mesure de distance est déduite du temps nécessaire à une impulsion laser pour se déplacer dans un sens puis dans l'autre, entre l'émetteur-récepteur et la cible.

A titre d'exemple il peut s'agir de mesurer des distances de plusieurs centaines (voire milliers) de kilomètres avec une précision de l'ordre de quelques centimètres. Il peut s'agir notamment de mesurer la distance entre un point de la Terre et un objet situé dans l'espace (véhicule spatial ou satellite naturel (Lune) ou artificiel en orbite autour de la Terre), voire plus généralement entre deux corps spatiaux, notamment véhicule spatial autour d'une autre planète, .... En cumulant de telles mesures et en utilisant plusieurs cibles, on peut par exemple déterminer ensuite avec précision, par des techniques de triangulation ou analogues, les distances entre divers points du globe terrestre.

La cible rétroréflectrice comporte en pratique un ou plusieurs rétroréflecteurs qui, de préférence, sont formés de trois facettes planes réfléchissantes contiguës et orthogonales entre elles, raccordées en un "coin de cube", et la diagonale du cube fictif auquel appartient ce coin de cube constitue un axe de référence appelé normale du rétroréflecteur. Une telle cible rétroréflectrice a pour propriété de renvoyer les rayons incidents parallèlement à eux-mêmes. Ainsi le renvoi vers l'émetteur du rayon laser, même sur de très grandes distances, n'impose pas le pointage de l'axe du coin de cube vers l'émetteur, dès lors que l'impulsion laser pénètre dans ce coin de cube, et bien sûr que l'orthogonalité des surfaces réfléchissantes soit aussi parfaite que possible.

En fait, l'impulsion renvoyée par le coin de cube parfait présente un seul lobe de diffraction avec un pic d'énergie dans la direction de renvoi et dont la largeur équivalente est donnée en première approximation par la relation $\lambda/d$ où $\underline{\lambda}$ est la longueur d'onde de l'impulsion incidente et $\underline{d}$ la dimension transversale moyenne de la cible (appelée par abus de langage : diamètre utile ou plus simplement diamètre). C'est ainsi que pour une longueur d'onde de 0,5 $\mu$m (couleur verte) et une cible de diamètre de 10 cm, la largeur du lobe (en l'absence d'un milieu perturbateur) est de l'ordre d'une seconde d'arc (cette largeur est en fait un angle sous lequel un observateur situé à l'emplacement de la cible verrait cette impulsion renvoyée).

Dès lors que l'angle sous lequel la cible voit l'écartement entre l'émetteur (au moment où l'impulsion incidente est émise) et le récepteur (au moment où l'impulsion réfléchie lui parvient) est inférieur à la largeur du lobe, le principe de télémétrie indiqué ci-dessus peut être mis valablement en oeuvre.

Par contre, le rendement énergie reçue/énergie émise de l'ensemble émetteur/récepteur se dégrade dès lors qu'il y a une vitesse relative importante entre cet ensemble émetteur/récepteur et la cible rétroréflectrice, transversalement à la direction qui les relie ; en fait il est connu dans ce cas de définir un angle d'aberration de vitesse, qui dépend du rapport entre la vitesse relative transverse et la vitesse du faisceau laser (donc la vitesse de la lumière). Lorsque cet angle d'aberration de vitesse devient supérieur à la largeur du lobe, cela veut dire que le récepteur se trouve à l'écart transversalement du lobe de diffraction de l'impulsion en retour, lorsque celle-ci parvient à l'emplacement qu'occupait l'ensemble émetteur/récepteur lors de l'émission de cette impulsion.

Pour compenser cette aberration de vitesse, il a déjà été proposé de modifier de quelques secondes d'arc les angles droits entre les trois facettes réfléchissantes de la cible, en sorte d'élargir le faisceau en retour. Mais en pratique, lorsque l'on augmente cet angle de modification à partir de zéro, le lobe de diffraction, initialement unique dans un graphique à trois dimensions corrélant la densité d'énergie émise par la cible dans une direction et deux angles d'inclinaison caractérisant l'orientation dans l'espace de cette direction par rapport à la direction de l'impulsion incidente, s'élargit en présentant en son centre un creux entouré d'une couronne irrégulière ; en fait, cette couronne est formée de six pics disposés en cercle et s'interpénétrant les uns les autres.

On obtient ainsi, au sein d'un rétroréflecteur donné, une correction "omnidirectionnelle" de l'aberration de vitesse, mais celle-ci devient insuffisante lorsque cette dernière correction est sensiblement supérieure à la largeur moyenne des six lobes individuels car une nouvelle augmentation des angles de modification se traduit par une dissociation de la couronne précitée en six lobes distincts : l'effet de compensation devient aléatoire selon que, du fait de la vitesse relative transverse, le récepteur vient intercepter ou non l'un de ces six lobes ; en outre lorsque le récepteur vient par chance intercepter l'un de ces six lobes, l'énergie lumineuse est faible puisque ne représentant au plus qu'un sixième de l'énergie globale.

On a alors proposé de disposer sur la cible de multiples petits rétroréflecteurs orientés de façon aléatoire autour de leurs normales de manière à générer en retour une impulsion globale formée d'une pluralité d'impulsions élémentaires dont les jeux de six lobes se compléteraient les uns les autres pour former conjointement un lobe en anneau. Toutefois l'existence de plusieurs rétroréflecteurs participant à la formation de ce lobe global nuit à la précision des mesures, compte tenu notamment des différences de position de ces rétroréflecteurs sur la cible, qui induisent notamment un échelonnement dans le temps des impulsions parvenant au récepteur, et de la petite taille de ces rétroréflecteurs qui limite à un faible niveau l'énergie individuelle des impulsions en retour.

La Demanderesse a déjà cherché à pallier ces inconvénients, et de permettre, même pour des vitesses relatives transverses importantes, d'assurer une correction efficace de l'aberration de vitesse et à obtenir des mesures de grande précision, tout en restant à un niveau élevé de rendement énergie lumineuse reçue/énergie émise.

Elle a proposé pour cela, dans la demande de brevet français 91-03795 déposée le 28 Mars 1991 mais non encore publiée, correspondant à la demande USSN 07/854723, à la demande canadienne 2063893.1, à la demande japonaise 4-73985 ou à la demande européenne 92-400716.4, de renoncer au principe de symétrie respecté jusque là dans le domaine de la télémétrie laser, où peu importait l'orientation des coins de cube autour de leurs normales, et où les mêmes exigences s'appliquaient aux trois arêtes.

Elle a enseigné pour cela de générer l'impulsion en retour dans un très petit nombre de rétroréflecteurs, conçus et disposés en sorte que l'énergie renvoyée soit dissociée, non plus en six lobes, mais en deux seulement, alignés parallèlement à la vitesse relative transverse.

Plus précisément la Demanderesse a proposé dans la demande précitée un dispositif de télémétrie laser à grande distance comportant un ensemble émetteur/récepteur, classique en soi, adapté à émettre et recevoir une impulsion laser et une cible rétroréflectrice adaptée à recevoir cette impulsion laser et la renvoyer parallèlement à elle-même, cet ensemble émetteur/récepteur décrivant par rapport à la cible une trajectoire relative en des points de laquelle cet ensemble a une vitesse relative globale V et, perpendiculairement à une ligne instantanée le reliant à la cible, une vitesse relative transverse $v_t$ qui est en moyenne de l'ordre au moins du km/sec, caractérisé en ce que cette cible comporte au moins un rétroréflecteur en forme de coin de cube dont le champ de vue intercepte ladite trajectoire en au moins un tronçon et qui comporte trois facettes planes réfléchissantes déterminant trois arêtes convergentes en un sommet, dont deux facettes sont orthogonales à la troisième tout en formant entre elles un angle différant de 90° d'une valeur d'écart $\varepsilon$ au moins égale à une seconde d'arc, ces dites facettes convergeant en une arête, dite "arête corrigée" et contenue dans un plan passant par l'axe du coin de cube et au moins approximativement perpendiculaire à l'orientation moyenne de la vitesse relative transverse en ce ou ces tronçons de trajectoire, l'écart $\varepsilon$ étant compris entre les valeurs minimale et maximale de la grandeur $v_t/(c.\sin\Theta)$, en radians, sur le (ou les) tronçon(s) de trajectoire interceptés par ledit champ de vue du rétroréflecteur, où $v_t$ et $\Theta$ sont respectivement, pour un point quelconque de ce ou ces tronçon(s), la vitesse relative transverse et l'angle entre la ligne reliant ce point à la cible et ladite arête corrigée, et où $c$ est la vitesse de la lumière.

En d'autres termes, lorsque la trajectoire relative entre l'émetteur-récepteur et la cible est de nature orbitale (c'est-à-dire que l'émetteur-récepteur (réciproquement la cible) décrit une orbite par rapport au corps céleste - une planète telle que la Terre ou la Lune - portant la cible (réciproquement l'émetteur-récepteur)), le plan P est au moins approximativement perpendiculaire aux plans des tronçons de trajectoire orbitale interceptés par le champ de vue du coin de cube.

Aux vitesses transverses connues à ce jour, correspondent le plus souvent des écarts d'angle compris entre 1" d'arc et 10" d'arc environ.

Un tel rétroréflecteur a typiquement une dimension transverse maximale (appelée "diamètre utile") d'environ 10 cm.

En fait, dans cette demande antérieure non publiée, la Demanderesse s'est plus particulièment intéressée à des cibles au sol, tandis que l'émetteur-récepteur était embarqué à bord d'un véhicule spatial.

La présente demande concerne le cas inverse, à savoir celui d'un émetteur-récepteur au sol, et d'un (ou plusieurs) rétroréflecteur(s) embarqué(s).

En fait la télémétrie laser entre une station-sol d'émission/réception et un satellite géodésique à rétroréflecteurs classiques est aujourd'hui réputée permettre des déterminations de distance avec une précision de l'ordre de 1 à 2 cm. Cette incertitude résiduelle dépend principalement pour l'instant des incertitudes existant dans la modélisation de la traversée de l'atmosphère terrestre par le rayonnement laser.

La prochaine mise en oeuvre de stations laser dotées d'une émission à deux couleurs est censée permettre, sous réserve d'avoir en retour un flux d'énergie suffisant, de réduire à quelques millimètres à peine l'incertitude due à la traversée de l'atmosphère terrestre. La principale cause d'incertitude sera alors la géométrie même du satellite géodésique.

En effet, les satellites géodésiques actuels sont de simples boules denses et sphériques, de quelques dizaines de centimètres de diamètre, munies d'un grand nombre de petits rétroréflecteurs à coin de cube plein. Une seule impulsion laser émise depuis la station et interceptant la sphère, donne ainsi lieu (voir ci-dessus) à une multitude d'impulsions de retour pas tout à fait simultanées, entre lesquelles la différence de phase est aléatoire. Cela se traduit, à la réception au sol, en une impulsion en retour peu cohérente et étalée dans le temps, d'où une incertitude dans l'identification du moment précis de l'arrivée de l'impulsion en retour.

L'invention vise à pallier cet inconvénient, en appliquant, de préférence mais pas nécessairement, les enseignements de la demande non publiée précitée au cas d'un ou plusieurs rétroréflecteurs embarqués. Plus précisément, un premier objet de l'invention est un véhicule spatial destiné à des mesures précises de distance vis à vis de points du sol, comportant un (ou plusieurs) rétroréflecteur(s) adapté(s) à assurer une correction efficace de l'aberration de vitesse tout en garantissant un flux d'énergie substantiel en retour ; elle vise en outre à permettre avantageusement un faible étalement dans le temps des impulsions en retour ainsi qu'une bonne connaissance de la position (distance et orientation) par rapport au satellite, en particulier par rapport à son centre de masse, d'un point de référence à choisir pour chaque rétroréflecteur (son sommet en pratique). L'invention vise enfin à satisfaire l'un et/ou l'autre des objectifs précités en restant de préférence compatible avec les caractéristiques de coût, volume, masse et performances des satellites de faible masse (moins de 500 kg - cas des minisatellites - voire moins de 100 kg ou même 50 kg - cas des microsatellites -), et en minimisant la sensibilité de ces performances à des phénomènes perturbateurs tels que pression de radiation solaire ou trainée atmosphérique par exemple.

L'invention vise notamment de bonnes performances dans un mode de mesure de distances dit "mode géométrique" où des mesures sont effectuées de manière quasi-simultanée (par exemple à moins de 15 mn près) entre le satellite géodésique et une pluralité de stations au sol.

L'invention propose ainsi un véhicule spatial à application géodésique destiné à parcourir une trajectoire dans un plan orbital autour d'une planète, comportant soit un rétroréflecteur unique en coin de cube, soit plusieurs rétroréflecteurs en coin de cube à champs de vue sensiblement disjoints, chaque rétroréflecteur étant destiné à venir au moins temporairement en regard de cette planète et ayant un sommet, une normale et trois facettes sensiblement orthogonales l'une à l'autre, à moins d'une minute d'arc près, en trois arêtes formant des angles sensiblement égaux avec cette normale, le diamètre utile de ce coin de cube, défini par la dimension transversale moyenne mesurée à la sortie de ce coin de cube, valant au moins 3 cm, ce sommet étant situé par rapport au centre de masse de ce véhicule spatial, à une distance dont la projection sur une ligne reliant le centre de masse au centre de la planète reste à tout instant à une valeur connue à des variations près de moins de 5 centimètres.

Cette valeur connue peut rester constante ou varier au cours du temps de façon connue ou prévisible.

Selon des dispositions préférées éventuellement combinées :

1er cas

- ce véhicule spatial comporte en outre un dispositif de stabilisation en attitude adapté à stabiliser le véhicule spatial suivant un axe de lacet dirigé vers le centre de la planète, un axe de tangage perpendiculaire au plan orbital et un axe de roulis perpendiculaire aux axes de lacet et de tangage et de même sens que la vitesse instantanée, grâce à quoi le véhicule spatial est stabilisé 3-axes,
- ce rétroréflecteur est unique,

- deux des facettes de ce rétroréflecteur unique sont orthogonales à la troisième de ces facettes et déterminent l'une avec l'autre, en une arête dite corrigée, un angle différant de 90° d'un écart non nul inférieur à une minute d'arc, ce rétroréflecteur unique étant implanté dans le véhicule spatial en sorte que cette arête corrigée et cette normale déterminent un plan perpendiculaire au plan orbital,
- ce rétroréflecteur fait partie d'un ensemble d'au moins deux rétroréflecteurs à champs de vue sensiblement disjoints,
- ce rétroréflecteur fait partie d'un ensemble de quatre rétroréflecteurs situés d'un même côté d'un plan, accolés les uns aux autres par leurs facettes en ayant leurs sommets à proximité immédiate les uns des autres,
- deux des facettes de chacun de ces rétroréflecteurs sont orthogonales à la troisième de ces facettes et déterminent l'une avec l'autre, en une arête dite corrigée, un angle différant de 90° d'un écart non nul inférieur à une minute d'arc, ces rétroréflecteurs étant implantés dans le véhicule spatial en sorte que leurs arêtes corrigées soient parallèles à l'axe de tangage,
- cet ensemble de quatre rétroréflecteurs est formé d'une plaque de base, d'une première paroi raccordée par une tranche à cette plaque de base parallèlement à l'axe de tangage en faisant avec cette plaque de base un angle différant de 90° d'une valeur égale à l'écart $\varepsilon$, et d'une seconde paroi raccordée à angle droit à la plaque de base et à la première paroi,
- la plaque de base est parallèle au plan des axes de roulis et de tangage,
- ce dispositif de stabilisation en attitude est à action progressive,
- ce dispositif de stabilisation en attitude est à action continue,
- le dispositif de stabilisation en attitude comporte au moins deux mâts s'étendant selon deux directions du plan roulis-lacet,
- le dispositif de stabilisation en attitude comporte au moins un mât s'étendant selon l'axe de lacet et au moins un mât s'étendant selon l'axe de roulis,
- chaque sommet est à proximité immédiate, à moins de quelques centimètres, du centre de masse du véhicule spatial.

2ème cas

- ce véhicule spatial est en rotation autour d'un axe d'autorotation et il comporte un dispositif de stabilisation en attitude adapté à maintenir cet axe d'autorotation perpendiculaire au plan orbital, le sommet du rétroréflecteur étant à moins de 5 centimètres (de préférence moins de 2 centimètres) de cet axe d'autorotation,
- ce dispositif de stabilisation en attitude est à action progressive,

- ce dispositif de stabilisation en attitude comporte au moins un magnétomètre et au moins une bobine magnétique,
- ce rétroréflecteur fait partie d'un ensemble de rétroréflecteurs ayant des champs de vue sensiblement disjoints,
- la normale de chaque rétroréflecteur passe au moins approximativement par l'axe d'autorotation,
- ce rétroréflecteur fait partie d'un ensemble de quatre rétroréflecteurs, situés d'un même côté d'un plan transversal à l'axe d'autorotation, en ayant leurs facettes parallèles et en ayant leurs sommets à une même distance, à quelques millimètres près (moins de 5 mm, voire moins de 1 mm), de cet axe d'autorotation, cette distance étant inférieure à 5 centimètres,
- deux des facettes de chacun de ces rétroréflecteurs d'un ensemble sont orthogonales à la troisième de ces facettes et déterminent l'une avec l'autre, en une arête dite corrigée, un angle différant de 90° d'un écart non nul inférieur à une minute d'arc, ces rétroréflecteurs étant implantés dans le véhicule spatial en sorte que leurs arêtes corrigées soient parallèles à l'axe de tangage,
- chaque ensemble est formé d'une plaque de base perpendiculaire à l'axe d'autorotation, et de deux parois raccordées à angle droit à cette plaque de base en formant entre elles un angle différant de 90° d'une valeur égale à l'écart $\varepsilon$,
- ce véhicule spatial comporte deux ensembles de quatre rétroréflecteurs longeant chacun un plan de base perpendiculaire à l'axe d'autorotation,
- les plans de base de ces deux ensembles sont séparées parallèlement à l'axe d'autorotation d'une distance $\underline{d}$,
- cette distance $\underline{d}$ est inférieure à la moitié de la dimension moyenne des ensembles transversalement à l'axe d'autorotation,
- cette distance $\underline{d}$ satisfait l'inégalité $(d/2).\sin \Theta \leq t$ si $\Theta$ est l'angle maximal d'inclinaison autorisé entre l'axe d'autorotation et la normale au plan orbital, et si $\underline{t}$ est l'écart maximal autorisé entre le sommet des rétroréflecteurs et l'axe d'autorotation.

### 3ème cas

- ce rétroréflecteur fait partie d'un ensemble d'au moins quatre rétroréflecteurs ayant leurs sommets situés à une même distance, à moins de 1 mm près, du centre de masse, cette distance étant inférieure à 5 centimètres,
- ce rétroréflecteur fait partie d'un ensemble de huit rétroréflecteurs ayant leurs sommets situés à une même distance à moins de 1 mm près, du centre de masse, cette distance étant inférieure à 5 centimètres,
- la normale de chaque rétroréflecteur passe au moins approximativement par le centre de masse,

- chacune des arêtes de chaque rétroréflecteur présente, vis à vis de 90°, un écart non nul inférieur à une minute d'arc, tous les écarts étant identiques à 20% près,
- cet écart est inférieur à 10 secondes d'arc,
- ce rétroréflecteur en coin de cube est creux,
- ce véhicule spatial est un minisatellite,
- ce véhicule spatial est un microsatellite.

On appréciera que l'invention couvre notamment quatre cas :

- un rétroréflecteur unique dont l'orientation vers la Terre (ou toute autre planète) est fixe, grâce à un système de stabilisation 3-axes. Ce réflecteur unique comporte de préférence une arête corrigée unique déterminant avec la normale de ce rétroréflecteur un plan perpendiculaire au plan orbital ; l'incertitude sur la valeur de la projection de la distance sommet/centre de masse sur la direction Terre-Satellite dépend uniquement de la qualité de la stabilisation,
- une pluralité de rétroréflecteurs, de préférence un ensemble de quatre rétroréflecteurs contigus, dont l'orientation vers la Terre est fixe, grâce à un système de stabilisation 3-axes. Ces réflecteurs ont de préférence chacun une arrête corrigée unique parallèle à l'axe de tangage (perpendiculaire au plan orbital). Les mêmes commentaires que précédemment s'appliquent à l'incertitude précitée,
- une pluralité de rétroréflecteurs, de préférence un ensemble de quatre rétroréflecteurs contigus, montés d'un même côté du plan orbital spatial stabilisé en autorotation autour d'un axe perpendiculaire au plan orbital. Il peut y avoir un tel ensemble de chaque côté du plan orbital. Ces réflecteurs ont de préférence une arête corrigée unique parallèle à cet axe d'autorotation. L'incertitude précitée dépend alors de la distance des sommets à l'axe d'autorotation et de la qualité de la stabilisation de celui-ci,
- une pluralité de rétroréflecteurs avantageusement contigus, de préférence au nombre de quatre (contigus ou non) ou huit (contigus), dont les sommets sont à proximité immédiate du centre de masse ; peu importe alors leur orientation exacte. Les rétroréflecteurs peuvent alors avoir leurs trois arêtes corrigées, d'un angle typiquement inférieur à une minute d'arc, de préférence inférieur à 10 secondes d'arc (les angles des trois arêtes étant de préférence égaux à environ 20 % près). L'incertitude précitée dépend alors de la distance des sommets au centre de masse.

Dans le cas d'un véhicule spatial stabilisé 3-axes l'incertitude sur la valeur de la projection peut être très faible (quelques millimètres au plus), ce qui peut conduire à une incertitude du même ordre, voire inférieure, sur les mesures de distances effectuées à l'aide du véhicule spatial.

Par contre, dans les cas précités de véhicule spatial stabilisé par autorotation, ou sans stabilisation en attitude, il faut noter que l'incertitude indiquée ci-dessus sur la longueur de la projection de la distance (sommet-centre de masse) sur la direction (véhicule spatial - centre de la planète), qui correspond en fait à la verticale locale, peut être très supérieure à l'incertitude entachant les mesures de distances effectuées avec un tel véhicule spatial.

On rappellera ici que l'incertitude précitée sur les mesures de distance résulte de l'incertitude qu'il y a sur la correction à apporter à la mesure de la distance émetteur-récepteur/sommet pour avoir la distance émetteur-récepteur/centre de masse, pour une attitude donnée du véhicule spatial et pour une orientation donnée du faisceau interceptant le rétroréflecteur considéré. Or cette incertitude est d'autant plus faible que l'on peut modéliser avec précision cette correction. En particulier, on comprend que cette modélisation peut être très précise dans le cas d'un véhicule spatial stabilisé 3-axes.

Mais il faut en outre bien prendre conscience qu'une modélisation est possible dans les autres cas, qu'il s'agisse d'un véhicule spatial stabilisé par autorotation avec un axe d'orientation connue et même dans le cas d'un véhicule spatial sans stabilisation, en tenant compte en particulier de ce qu'un rétroréflecteur ne peut participer à une mesure qu'à condition qu'à l'instant considéré le rayon incident y pénètre, c'est-à-dire fasse un angle en pratique inférieur à approximativement 40° avec la normale de ce rétroréflecteur ; en d'autres termes on sait au moins, lorsqu'un faisceau, émis selon une direction donnée, est réfléchi, que ce faisceau a intercepté un rétroréflecteur dont la normale faisait au plus 40° avec cette direction d'émission. La correction de distance peut alors être modélisée en tenant compte d'informations disponibles concernant la position du centre de masse par rapport à cette normale du rétroréflecteur ; en particulier dans le cas (préféré, selon l'invention) où le centre de masse de chaque rétroréflecteur passe par le centre de masse, même en l'absence de toute stabilisation, on peut modéliser comme suit la correction de distance à apporter : la correction réelle de distance à apporter est égale à la projection sur la direction d'émission de la distance $\underline{d}$ entre le sommet et le centre de masse ; cette correction réelle est comprise entre $\underline{d}$ et $\underline{d}.\cos 40°$ ; on peut approximer (d'autres solutions sont possibles) cette correction réelle par :

$$d.\frac{(1 + COS\ 40°)}{2}$$

l'incertitude sur la correction ainsi modélisée est alors d'au plus :

$$d.\frac{(1 - COS\ 40°)}{2}$$

c'est-à-dire environ 0,1d. On comprend ainsi que si, pour des raisons de construction, on dispose sur un véhicule spatial non stabilisé, des rétroréflecteurs dont les normales passent par le centre de masse et dont les sommets sont à une distance de 5 centimètres de ce centre de masse, on pourra pourtant faire des mesures de distance à moins d'environ 5 mm. près.

Un raisonnement du même genre peut être conduit pour un véhicule spatial stabilisé en autorotation. La précision de la modélisation de l'erreur sera d'autant meilleure que les normales des rétroréflecteurs passent par l'axe d'autorotation.

Des objets, caractéristiques et avantages de l'invention ressortent de la description qui suit, donnée à titre d'exemple non limitatif, en regard des dessins annexés sur lesquels :

- la figure 1 est une vue schématique en perspective d'un satellite géodésique de faible masse et à rétroréflecteur, conforme à un aspect de l'invention, dans une version très simple de réalisation,
- la figure 2 est une vue schématique d'un autre satellite géodésique conforme à l'invention, dans une version à quatre rétroréflecteurs,
- la figure 3 est une vue de dessous, selon la flèche III de la figure 2, de l'ensemble des quatre rétroréflecteurs,
- la figure 4 est un schéma de principe en perspective d'un autre satellite géodésique conforme à l'invention, à huit rétroréflecteurs,
- la figure 5 est une vue schématique d'un autre satellite conforme à une variante du schéma de la figure 4,
- la figure 6 est une vue en bout de ce satellite selon la flèche VI de la figure 5, et
- la figure 7 est une vue schématique d'une variante de réalisation d'un système de stabilisation à mât de gravité.

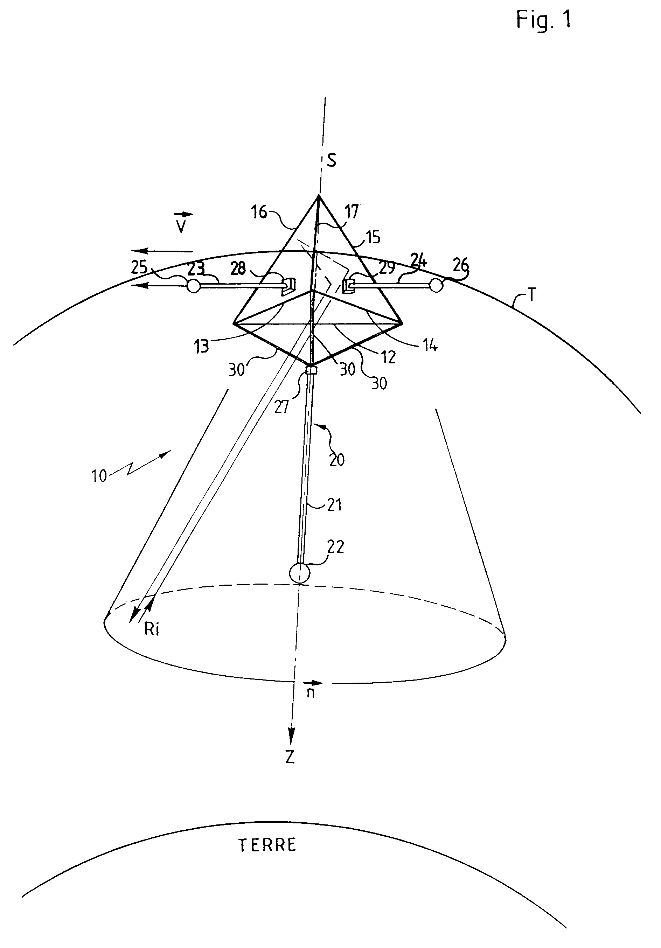

La figure 1 représente de façon schématique un satellite géodésique conforme à l'invention désigné dans son ensemble par la référence 10. Il comporte principalement un rétroréflecteur 11 en coin de cube et de préférence un dispositif de contrôle d'attitude 20.

Le rétroréflecteur 11 en coin de cube comporte trois facettes planes réfléchissantes 12, 13 et 14 qui déterminent trois arêtes 15, 16 et 17 qui convergent en un sommet S. De préférence deux des facettes, ici les facettes 12 et 13, sont orthogonales à la troisième facette 14 tout en faisant entre elles un angle présentant un écart $\underline{\varepsilon}$ à l'orthogonalité, faible mais non nul, en pratique de l'ordre de 1 à 10 secondes d'arc. On appelle l'arête 17 entre les deux facettes précitées : arête corrigée.

Le coin de cube 11 est ici creux mais peut, en variante non représentée, être une portion massive de cube en un matériau transparent à la longueur d'onde choisie pour les impulsions de mesure (voir ci-dessous).

On appelle normale du coin de cube $\bar{n}$ la direction faisant un angle égal avec les trois arêtes 15, 16 et 17 (c'est une diagonale du cube fictif auquel appartient le coin de cube). Cette normale fait un angle de 54,7° avec les arêtes, donc proche de 55°. Le champ de vue du rétroréflecteur est approximativement un cône de demi-angle à 30°.

La dimension transversale moyenne mesurée (transversalement à la normale) à la sortie du rétroréflecteur est appelée diamètre utile ; il est de plusieurs centimètres (typiquement supérieur à 3 cm) de préférence de l'ordre d'une dizaine de centimètres.

Un rayon incident Ri contenu dans le champ de vue est renvoyé par le rétroréflecteur, après réflexion sur les trois faces, en un rayon en retour qui lui est sensiblement parallèle.

Le satellite 10 décrit une trajectoire T autour de la Terre en étant stabilisé par le dispositif de contrôle d'attitude 20 en sorte que la normale $\bar{n}$ du coin de cube soit dirigée vers la Terre. Plus précisément, on définit pour le satellite un trièdre orthonormé direct X Y Z dont l'axe Z (axe de lacet) est destiné à être pointé vers le centre de la Terre, l'axe Y (axe de tangage) est perpendiculaire au plan de l'orbite et l'axe X (axe de roulis) complète le trièdre en sorte d'être de même sens que la vitesse instantanée du satellite. La normale $\bar{n}$ du coin de cube est de préférence, mais pas nécessairement, confondue avec l'axe de lacet, c'est-à-dire est de préférence, mais pas nécessairement, dirigée vers le centre de la Terre. Ces axes sont en principe des axe principaux d'inertie.

L'arête corrigée 17 est orientée en sorte que le plan que cette arête définit avec la normale $\bar{n}$ est perpendiculaire au plan orbital, ce à quelques degrés près (± 10°, de préférence à moins de 5° près).

L'écart $\varepsilon$ est compris entre les valeurs minimale et maximale que prend la grandeur $v_t/(c. \sin \Theta)$ en radians pour diverses inclinaisons de rayon incident, où $v_t$ est la vitesse relative transverse instantanée (c'est-à-dire la composante de la vitesse V qui est perpendiculaire au rayon incident), $\Theta$ est l'angle instantané entre la direction du rayon et l'arête corrigée, et $c$ est la vitesse de la lumière : cela aboutit typiquement à la plage précitée de 1 à 10 secondes compte tenu des vitesses typiques de parcours des orbites de satellites géodésiques (le plus souvent des orbites basses).

Du fait de l'écart $\varepsilon$, le rayon incident est réfléchi avec des maxima d'énergie selon deux directions légèrement décalées de quelques secondes d'arc de part et d'autre de la direction du rayon incident (il est en fait formé d'une, ou de plusieurs impulsions successives brèves). Du fait de la condition précitée d'orthogonalité entre le plan défini par l'arête corrigée et la normale et le plan orbital, les deux directions précitées d'énergie maximale sont décalées parallèlement à la trajectoire, ce qui garantit que malgré l'aberration de vitesse due à la vitesse relative transverse importante entre un émetteur-récepteur au sol et le satellite, cet émetteur-récepteur reçoive en retour une énergie significative.

Le principe d'une telle correction d'aberration de vitesse a déjà été décrit, dans sa généralité, dans la demande de brevet 91-03795 précitée déposée le 28 Mars 1991 mais non encore publiée.

Le dispositif de contrôle d'attitude 20, de tout type approprié connu en soi, est avantageusement ici de type passif, en ce sens que, après la mise à poste du satellite sur son orbite de service, il ne consomme plus d'énergie.

Plus précisément, ce dispositif tire parti du moment naturel des forces de gravitation (terrestres dans notre exemple) sur un corps (satellite terrestre dans notre exemple) présentant des différences sensibles entre ses moments d'inertie principaux.

Ainsi, le couple de gravité tend à aligner de façon stable avec la direction géocentrique l'axe principal d'inertie auquel est associée la plus petite inertie dans la mesure où certaines conditions de stabilité sont vérifiées par les inerties principales du satellite (notamment que la différence entre les inerties principales transverses en valeur absolue soit inférieure à l'inertie principale la plus petite et que les inerties principales transverses soient sensiblement différentes l'une de l'autre).

Le dispositif 20 comporte à cet effet un ensemble de mâts disposés dans le plan roulis-lacet de façon symétrique par rapport à l'axe de lacet ; ce dispositif 20 comporte un mât 21 s'étendant selon l'axe de lacet Z vers la Terre, de préférence terminé par une masse 22. De manière avantageuse le satellite comporte en outre un mât non représenté s'étendant dans le prolongement mais à l'opposé du mât 21. Outre qu'il augmente le moment d'inertie associé aux autres axes principaux d'inertie X et Y, un tel deuxième mât en pratique symétrique du premier, a l'avantage de limiter les couples perturbateurs (notamment dûs à la traînée dans l'atmosphère dans le cas d'orbites basses - ce qui peut être le cas dans les applications géodésiques - ou à la pression de radiation solaire). Un autre avantage est de permettre à volonté le positionnement du centre de masse, de préférence près du sommet S.

Ce (ou ces) mât(s) s'étendant selon l'axe Z assurent une stabilisation en attitude de cet axe. Pour assurer une stabilisation du satellite autour de ses deux autres axes, le dispositif 20 comporte en outre deux mâts 23 et 24 s'étendant en sens opposés le long de l'axe de roulis X et terminés par des masses 25 et 26.

En pratique, ces bras sont télescopiques, commandés en déploiement après largage vis à vis d'un lanceur par des moteurs de déploiement 27, 28 et 29. Ces bras ne sont de préférence pas directement raccordés au rétroréflecteur 10 mais raccordés à une structure de support dont des tringles 30 de liaison du mât 21 au reste du satellite sont représentées à la figure 1.

Ce satellite 10 est une version très simple de l'invention.

Le système de stabilisation à mâts de gravité est en pratique complété par :

- un dispositif convenable connu en soi d'aide à la mise à poste (bobine(s) magnétique(s) et ou aimant(s) chargeable(s) avec en outre un ou des détecteur(s) d'attitude : magnétomètre(s), détecteur-Terre, détecteur(s) solaire(s) et un système de communication permettant la réception des télécommandes depuis le sol et l'émission des télémesures du satellite vers le sol), ainsi que d'un dispositif d'amortisseur, de préférence sans articulation, (par exemple barreau(x) à hystérésis ou système à ancrage magnétique).

Dans la pratique, l'alimentation électrique des équipements consommateurs nécessite la mise en place d'une architecture électrique, d'une batterie et de cellules solaires, ainsi que d'un dispositif de contrôle thermique aussi passif que possible.

D'autres systèmes de stabilisation 3-axes avec mâts de gravité dans le plan roulis-lacet sont possibles, tels que par exemple celui schématisé à la figure 7, avec une configuration en croix de Saint-André avec des mâts disposés de façon symétrique de part et d'autre de l'axe de lacet vis à vis duquel ils présentent toutefois une faible inclinaison, ce qui permet le respect des conditions précitées sur les moments principaux d'inertie.

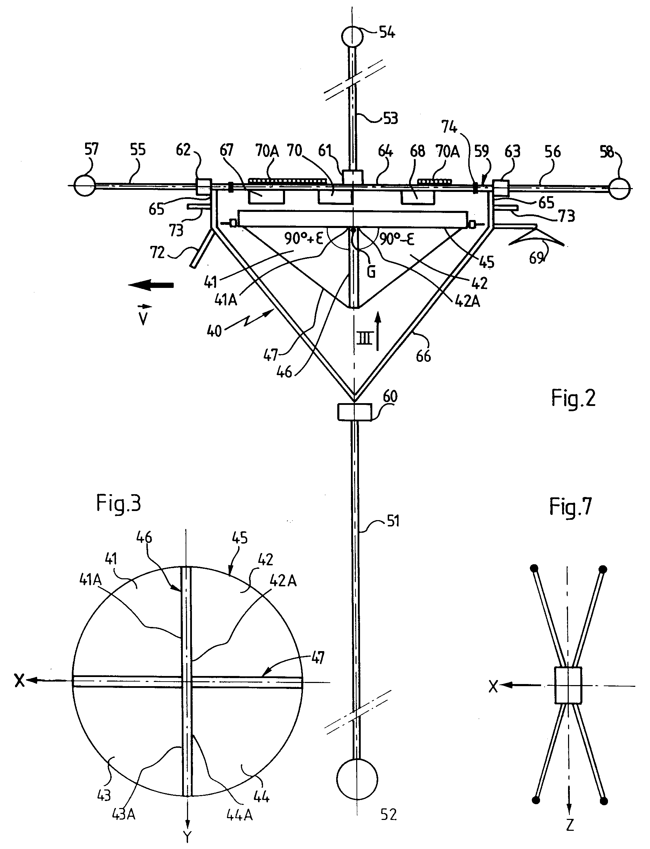

La figure 2 montre un autre satellite géodésique stabilisé 3-axes conforme à l'invention, désigné par la référence générale 40.

Ce satellite 40 se distingue principalement du satellite de la figure 1 par le fait qu'au lieu d'un rétroréflecteur unique, il comporte un ensemble de quatre rétroréflecteurs 41, 42, 43 et 44 accolés les uns aux autres en sorte que leurs sommets soient à proximité immédiate les uns des autres (typiquement moins de 5 cm) tout en ayant des champs de vue disjoints.

Plus précisément, cet ensemble de rétroréflecteurs est ici formé d'une plaque de base 45 et de deux parois de séparation 46 et 47 se croisant à angle droit et sensiblement perpendiculaires à la plaque de base. En pratique, l'une 46 des parois, dite principale, est d'une seule pièce tandis que l'autre 47 des parois, dite secondaire, est en deux parties. Ces parois déterminent en leur croisement une direction sensiblement perpendiculaire à la plaque de base qui sera appelée normale de l'ensemble du rétroréflecteur. Cette normale s'étend avantageusement selon l'axe de lacet Z tandis que les parois 46 et 47 s'étendent parallèlement aux axes de tangage et de roulis respectivement (ou inversement).

La paroi (ici 46) s'étendant parallèlement à l'axe de tangage présente un écart $\varepsilon$ à l'orthogonalité (positif d'un côté de cette paroi, et négatif de l'autre) par rapport à la plaque de base tandis que l'autre paroi (ici 47) parallèle à l'axe de roulis est rigoureusement perpendiculaire aussi bien à la plaque de base qu'à la paroi parallèle à Y (aux tolérances de fabrication près, bien sûr, lesquelles sont de l'ordre de la seconde d'arc).

De la sorte les quatre rétroréflecteurs comportent tous une arête corrigée unique repérée 41A, 42A, 43A ou 44A, qui est parallèle à l'axe de tangage grâce à quoi la condition précitée d'orthogonalité au plan orbital du plan défini par la normale et l'arête corrigée de chaque rétroréflecteur est satisfaite.

On appréciera la simplicité de structure du bloc constitué par les rétroréflecteurs 41 à 44.

L'assemblage de la plaque et des parois est par exemple assuré par collage et/ou par adhésion moléculaire.

D'autres méthodes de réalisation sont possibles. Ainsi par exemple l'ensemble des rétroréflecteurs peut être obtenu par dépôt de surfaces réfléchissantes sur un substrat monobloc moulé, en utilisant la technique dite de réplique. Le respect des conditions sur les angles dépend bien sûr de la qualité de la forme maîtresse servant à faire les répliques. Chaque rétroréflecteur constitue ainsi un module monobloc, et tout ensemble de rétroréflecteurs est réalisé par regroupement de tels modules. Une telle constitution en modules a notamment l'avantage de dissocier les opérations de réalisation de chaque module et celles de montage, d'où de moindres conséquences en cas de problème de réalisation.

La contrainte sur le parallélisme des quatre arêtes corrigées est par exemple de ± 1°. Il est à noter ici que le mode d'assemblage indiqué ci-dessous à propos de la figure 3 garantit un très bon parallélisme des arêtes corrigées.

Quant à l'alignement des arêtes corrigées avec la normale locale au plan orbital, la précision visée est par exemple de ± 10°, de préférence ± 5° (il faut se rappeler ici que les satellites visés ici (microsatellites) sont de petite taille et de petites masses, ce qui peut justifier des exigences de contrôle d'attitude moins sévères que pour des satellites normaux : plusieurs tonnes et des dimensions de plusieurs mètres).

Le fait que les quatre rétroréflecteurs aient des champs de vue disjoints, contrairement à ce que l'on pourrait penser de prime abord, n'est pas rédhibitoire même si notamment la normale définie ci-dessus pour l'ensemble des rétroréflecteurs n'est contenue dans le champ de vue d'aucun rétroréflecteur. En effet, la direction de cette normale n'a pas d'importance pratique privilégiée pour l'émission-réception. En outre, cette direction est neutralisée dans l'exemple de la figure 2 par l'existence d'un mât de stabilisation s'étendant selon l'axe de lacet.

Le satellite 40 de la figure 2 est en effet stabilisé en attitude, comme celui de la figure 1, de façon passive.

Il comporte ainsi un mât longitudinal principal de stabilisation 51 s'étendant selon l'axe de lacet, vers la Terre, et terminé par une masse 52, un mât longitudinal secondaire de stabilisation 53 s'étendant à l'opposé du mât principal 51 et terminé par une masse 54, ainsi que deux mâts transversaux de stabilisation 55 et 56, plus courts s'étendant selon l'axe de roulis et terminés par des masses 57 et 58. Ces mâts sont en pratique télescopiques et sont raccordés à une structure porteuse 59, dans laquelle est logé l'ensemble à rétroréflecteurs, par des moteurs de commande en déploiement repérés 60 à 63.

La structure porteuse 59 comporte ici une plaque arrière 64 transversale à l'axe de lacet 2, des parois latérales 65 et une tringle 66, auxquels sont fixés divers équipements du satellite dont par exemple :

- un bloc électronique 67 de commande des moteurs de déploiement des mâts,
- un bloc électronique de télécommunication 68 pour l'échange avec le sol de télémesures et de télécommandes, à l'aide d'une antenne 69,
- une batterie 70,
- des panneaux solaires 71 fixés à la structure ou déployables orientés vers l'extérieur et disposés en nombre, taille et orientation de façon à satisfaire les besoins du satellite en alimentation électrique,
- des détecteurs terrestre 72, solaires 73, ou encore des magnétomètres (non représentés).

On notera l'existence entre la plaque de base 45 de l'ensemble de rétroréflecteurs et la plaque arrière 64 de la structure porteuse d'un volume facilement aménageable pour loger certains des équipements précités.

Des masses d'équilibrage, schématisées en 74, sont avantageusement prévues pour permettre, compte tenu notamment des longueurs des mâts et des masses associées, d'amener le centre de masse G du satellite le plus près possible des sommets des rétroréflecteurs, grâce à quoi une éventuelle dérive en attitude du satellite n'a qu'une incidence minime sur la précision des mesures de distance entre les sommets des rétroréflecteurs et des stations émettrices/réceptrices au sol.

Cette précision, y compris en cas de dérive en attitude, est en fait d'autant meilleure que les sommets sont près du centre de masse (ce commentaire vaut également pour le satellite de la figure 1 avec un seul sommet).

A titre d'exemple la plaque de base 45 a un diamètre de 200 mm et les parois 46 et 47 (ici de forme triangulaire, mais d'autres formes sont possibles telles que semi-circulaire, semi-elliptique, polygonale ....) ont une épaisseur de 15 mm (voire moins).

L'épaisseur des parois 46 et 47 doit être suffisamment grande pour garantir la rigidité de l'ensemble des rétroréflecteurs et garantir une bonne qualité optique des surfaces réfléchissantes malgré d'éventuelles perturbations thermiques ou du fait d'effets centrifuges. Plus ces parois sont fines, plus les sommets optiques sont proches les uns des autres (voir ci-dessus) et moindre sera l'erreur de distance introduite sur les mesures par une éventuelle dérive en attitude.

Le dispositif de stabilisation du satellite 40 est du type essentiellement passif, fondé sur le gradient de gravité terrestre. Cette technique de stabilisation, connue en soi, peut être suffisante pour maintenir le satellite dans son attitude nominale avec la précision indiquée ci-dessus (± 10°).

En pratique les équipements additionnels précités, destinés notamment à la communication, à l'alimentation en énergie des équipements consommateurs ainsi qu'au contrôle thermique, font que le satellite ne peut être entièrement passif. De préférence, des éléments actifs ou passifs additionnels peuvent être rajoutés pour améliorer la stabilisation.

En effet d'autres techniques connues de stabilisation en attitude 3-axes peuvent être utilisées (seules ou en combinaison).

Selon une variante de réalisation, la stabilisation de l'attitude en lacet se fait de façon passive grâce à un ou deux mâts s'étendant selon cet axe de lacet tandis que la stabilisation suivant les autres axes est effectuée de façon active, par exemple par un ensemble (magnétomètre + bobines magnétiques).

Selon encore une autre variante, la stabilisation est effectuée de façon active, selon le concept de moment cinétique embarqué suivant l'axe asservi à la normale au plan orbital, ce moment cinétique étant réalisé matériellement par une roue cinétique fonctionnant nominalement autour d'une vitesse moyenne non nulle ou d'une roue à réaction utilisée en roue cinétique. Il peut y avoir association d'un mât en lacet et d'une roue en tangage.

Selon d'autres variantes on peut, avec des performances de pointage allant en s'améliorant, mais des masses, des consommations électriques et des coûts augmentés, utiliser deux, trois ou quatre roues, voire davantage.

Il est à noter qu'une dérive d'attitude est tolérable, même si le (ou les) sommet(s) de rétroréflecteur(s) sont décalés du centre de masse, dès lors que l'on peut, grâce à des télécommunications avec le sol, déterminer avec précision la position de ce sommet par rapport au centre de masse, à la direction géocentrique et à la tangente instantanée à la trajectoire.

On appréciera qu'en principe, du fait que le satellite est stabilisé 3-axes, l'incertitude sur la longueur de la projection sur la verticale locale (Z) de la distance de chaque sommet de rétroréflecteur au centre de masse est très faible (tolérances de fabrication (inférieures au mm) plus tolérances de stabilisation).

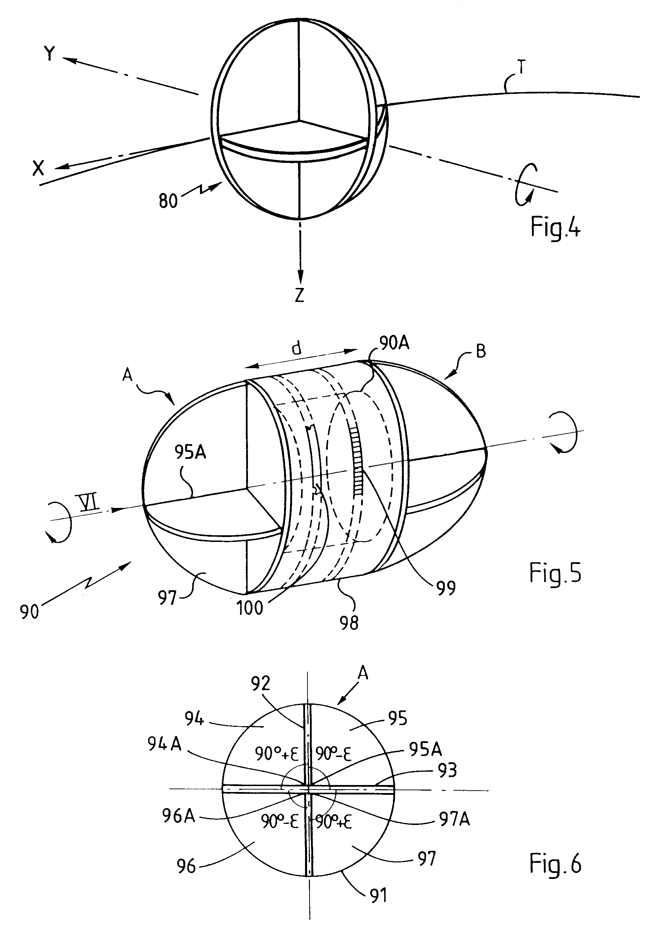

La figure 4 représente schématiquement un véhicule spatial 60 comportant huit rétroréflecteurs en coins de cube à sommets contigus situés à proximité immédiate du centre de masse (à des des distances de celui-ci qui sont égales, à moins d'un millimètre près, ces distances étant inférieures à 5 cm). Les normales de ces rétroréflecteurs passent aussi près que possible du centre de masse (ce qui, on l'a vu, facilite la modélisation de la correction à apporter aux mesures). En variante non représentée, ce véhicule spatial peut comporter un nombre de rétro-réflecteurs inférieur à huit, pour faciliter l'implantation d'équipements ; il suffit par exemple de remplacer un rétroréflecteur sur deux par un équipement ; pour des raisons pratiques, il paraît toutefois préférable de garder au moins quatre rétroréflecteurs, par exemple non contigus, pour assurer une couverture minimale de l'espace ; il n'y a pas nécessairement de parallélisme entre les facettes ; par contre, il reste intéressant de garder le centre de masse sur les normales des divers rétroréflecteurs.

Comme précédemment, les rétroréflecteurs peuvent être formés de plaques (cf. figures 2 et 3) ; toutefois, il peut être préférable de les réaliser sous forme de modules, en sorte de donner toute liberté quant à leur implantation.

Le diamètre utile des divers rétroréflecteurs est de préférence de l'ordre de 10 cm, voire plus, et il est avantageusement le même pour tous les rétroréflecteurs d'un même véhicule spatial (cela est valable pour tous les exemples considérés ici).

Ce véhicule spatial peut être d'orientation quelconque, et avoir éventuellement ses trois arêtes corrigées (d'angles non nuls typiquement inférieurs à 1 minute d'arc, voire moins de 10 secondes d'arc, et égaux à 20 % près).

Toutefois, en variante, ce satellite est animé d'un mouvement de rotation autour d'un axe du satellite destiné à être perpendiculaire au plan orbital. Chacun des rétroréflecteurs comporte alors de préférence une arête corrigée unique parallèle à cet axe de rotation. De la sorte ce satellite présente à tout instant en direction de la Terre un groupe de quatre rétroréflecteurs conforme à celui des figures 2 et 3, c'est-à-dire un groupe de quatre rétroréflecteurs ayant des arêtes corrigées uniques parallèles à l'axe Y. Ce satellite 80 peut donc être assimilé à deux ensembles de rétroréflecteurs du type décrit aux figures 2 et 3 accolés dos à dos.

Toutefois cette configuration de la figure 4 avec huit rétroréflecteurs, fait qu'il peut être difficile d'implanter des équipements (notamment le système de stabilisation en attitude) sans gêner le champ de vue de l'un ou l'autre des rétroréflecteurs.

C'est pourquoi il peut être préférable, ainsi qu'on va le voir à propos des figures 5 et 6, de dissocier ces huit rétroréflecteurs en deux groupes A et B de quatre rétroréflecteurs.

Ces figures 5 et 6 correspondent à une stabilisation par autorotation (en anglais "spin") autour d'un axe principal d'inertie du satellite ; cet axe est de préférence l'axe principal du satellite auquel correspond le moment d'inertie le plus élevé. Il est en principe perpendiculaire au plan orbital.

De manière préférée, ainsi qu'il ressort de la figure 6, chaque groupe A et B comporte une plaque de base 91 transversale à l'axe de rotation et deux parois 92 et 93 rigoureusement orthogonales à cette plaque de base mais présentant entre elles un écart $\varepsilon$ à l'orthogonalité en sorte de former quatre rétroréflecteurs 94 à 97 ayant des arêtes corrigées 94A, 95A, 96A et 97A situées à proximité les unes des autres.

De la sorte les sommets des rétroréflecteurs qui constituent des points de référence pour les mesures de distance sont à une distance très faible de l'axe de rotation, (moins de 5 cm, voire quelques millimètres à peine).

La figure 5 représente un satellite 90 dont les groupes A et B ont leurs plaques de base séparées parallèlement à l'axe de rotation d'une distance $\underline{d}$, en sorte de dégager un espace disponible pour l'implantation du dispositif de stabilisation en attitude schématisé en 90 A ainsi que d'équipements (par exemple ceux cités à propos de la figure 2). Sur cette figure 5 les groupes A et B de rétroréflecteurs sont reliés par une paroi cylindrique 98 de même diamètre (typiquement 20 cm) que les plaques de base. Sur cette paroi sont schématisés en 99 des cellules solaires, et en 100 une antenne en ceinture, par exemple réalisée en technologie micro-ruban. Le système de stabilisation 90A contenu dans la paroi comporte par exemple un (ou des) magnétomètre(s) et des bobines magnétiques (une telle stabilisation d'un satellite par autorotation est décrite par exemple dans Vol 2, Proceedings of the 4th Annual AIAA/USU Conference on small satellites, August 27-30, 1990 : "Magnetic Attitude System for Spinning Small Spacecrafts" par P.K. PAL et V.H. SELBY de la Société ITHACO.

La distance $\underline{d}$ est de préférence inférieure au rayon des plaques de base 91, quitte à augmenter le diamètre de la paroi 98 bien au delà de celui desdites plaques 91. Plus généralement on peut définir la valeur maximale de d par la relation

$$(d/2).\sin \theta \leq 5 \text{ mm}$$

si $\theta$ est l'écart maximal de l'axe de spin par rapport à la normale du plan orbital. Cette inégalité traduit que, si le centre de masse est bien au centre géométrique du satellite, l'écart des sommets des rétroréflecteurs à la normale instantanée au plan orbital (au centre de masse) est inférieur à la tolérance (ici 5 mm) admise pour les mesures de distance. Bien entendu, on peut adopter d'autres valeurs de tolérance dans l'inégalité précitée.

En fait, les sommets des rétroréflecteurs ne sont jamais exactement sur ladite normale instantanée du fait de l'épaisseur non nulle des parois 92 et 93. En fait, il apparaît préférable que les normales des rétroréflecteurs interceptent l'axe d'autorotation, en sorte de faciliter la modélisation des corrections de distance à appliquer aux mesures de distance. Le nombre de rétroréflecteurs par groupe A ou B est de préférence égal à 4, mais des nombres inférieurs sont envisageables ; il n'y a plus alors de parallélisme entre facettes.

Les mêmes remarques que pour la figure 3 s'appliquent au dimensionnement et à la conformation de ces parois ou à la mise en oeuvre de modules monoblocs.

D'autres types d'actionneurs pour la stabilisation de l'axe de rotation peuvent être envisagés.

Le système de stabilisation du satellite peut en outre comporter, de façon connue en soi, des moyens d'amortissement de la nutation (par exemple de type magnétique, ou par déplacement de fluide visqueux dans un tube droit ou courbe).

Dans le cas d'orbites de faible inclinaison (voire nulle) par rapport au plan équatorial, une bobine magnétique placée suivant l'axe de spin a une très faible efficacité ; on peut alors utiliser des bobines magnétiques planes pour contrôler la direction de l'axe d'autorotation et la vitesse d'autorotation.

De manière préférée, pour maintenir avec une bonne précision (moins de 5°) l'alignement de l'axe d'autorotation avec la normale au plan orbital, le satellite est avantageusement muni d'un détecteur terrestre du type dit "à horizon", éventuellement combinés à des détecteurs solaires.

On appréciera que les satellites décrits ci-dessus à propos des figures 1 à 3 et 5 à 7, sont équipés de systèmes de stabilisation en attitude (selon trois axes ou en autorotation) à action lente et progressive (voire continue) c'est-à-dire sans impulsions, compatibles avec les faibles masses globales envisagées pour la classe des satellites dits mini voire microsatellites et avec la contrainte (liée à l'application géodésique) de minimiser les perturbations induites sur le comportement orbital. Ainsi par exemple un système de stabilisation passif par gravité (avec un mât de 10 m de long et portant une masse de 4 kg) pour un satellite d'environ 50 kg décrivant une orbite circulaire à 1200 km avec une inertie en lacet de 30 kg.m$^2$, représente moins de la moitié de la masse. La masse d'un dispositif de stabilisation par roue et système magnétique peut être inférieure à 10 kg, tandis que la masse nécessaire pour une stabilisation spinnée utilisant un magnétomètre 2-axes, deux bobines magnétiques et un détecteur Terre à horizon, peut s'estimer à moins de 5 kg, voire moins de 1 kg dans un cas d'optimisation de la stabilisation très poussé comme celui du microsatellite de communication "SCSC" ou "MICROSAT" réalisé par DEFENSE SYSTEM INC. pour "Défense Advanced Research Projects Agency" (DARPA), la stabilisation étant réalisée par la Société ITHACO INC. dont Messieurs PARIMAL K.PAL and VAUGHN H. SELBY (mentionnés ci-dessus) font partie.

A titre d'exemple, pour une vitesse relative satellite/terre de 5 à 8 km/s, correspondant à une aberration de vitesse angulaire de 6,9" arc, $\varepsilon$ vaut entre 4,2" à 6,8" ; pour une vitesse relative de 3 km/s, correspondant à une aberration de 4,1" arc, $\varepsilon$ vaut 2,5 ".

Compte tenu de ce que les éléments rétroréflecteurs constituent, dans les microsatellites décrits, l'essentiel de la charge utile et sont réalisés en alliages légers (aluminium, titane ou autre), le poids de ces microsatellites, compte tenu des indications précitées sur le dispositif de stabilisation, est bien compatible avec les spécifications de masse et de dimensions des microsatellites. Ils peuvent ainsi aisément se "caser" sous la coiffe d'un lanceur (ARIANE par exemple) à côté d'un satellite principal, voire être lancés en grappe.

Il va de soi que la description qui précède n'a été proposée qu'à titre d'exemple non limitatif et que de nombreuses variantes peuvent être proposées par l'homme de l'art sans sortir du cadre de l'invention définie par les revendications qui suivent.

## Revendications

1. Véhicule spatial à application géodésique destiné à parcourir une trajectoire dans un plan orbital autour d'une planète, comportant soit un rétroréflecteur unique (11) en coin de cube, soit plusieurs rétroréflecteurs en coin de cube (41-44 ; A, B) à champs de vue sensiblement disjoints, chaque rétroréflecteur étant destiné à venir au moins temporairement en regard de cette planète et ayant un sommet (S), une normale et trois facettes sensiblement orthogonales l'une à l'autre, à moins d'une minute d'arc près, en trois arêtes formant des angles sensiblement égaux avec cette normale, le diamètre utile de ce coin de cube, défini par la dimension transversale moyenne mesurée à la sortie de ce coin de cube, valant au moins 3 cm, ce sommet étant situé par rapport au centre de masse de ce véhicule spatial, à une distance dont la projection sur une ligne reliant le centre de masse au centre de la planète reste à tout instant à une valeur connue à des variations près de moins de 5 centimètres.

2. Véhicule spatial selon la revendication 1, caractérisé en ce qu'il comporte en outre un dispositif de stabilisation en attitude adapté à stabiliser le véhicule spatial suivant un axe de lacet dirigé vers le centre de la planète, un axe de tangage perpendiculaire au plan orbital et un axe de roulis perpendiculaire aux axes de lacet et de tangage et de même sens que la vitesse instantanée, grâce à quoi le véhicule spatial est stabilisé 3-axes.

3. Véhicule spatial selon la revendication 2, caractérisé en ce que ce rétroréflecteur est unique.

4. Véhicule spatial selon la revendication 3, caractérisé en ce que deux des facettes de ce rétroréflecteur unique sont orthogonales à la troisième de ces facettes et déterminent l'une avec l'autre, en une arête dite corrigée (17), un angle différant de 90° d'un écart non nul inférieur à une minute d'arc, ce rétroréflecteur unique étant implanté dans le véhicule spatial en sorte que cette arête corrigée et cette normale déterminent un plan perpendiculaire au plan orbital.

5. Véhicule spatial selon la revendication 2, caractérisé en ce que ce rétroréflecteur fait partie d'un ensemble d'au moins deux rétroréflecteurs (41-44) à champs de vue sensiblement disjoints.

6. Véhicule spatial selon la revendication 5, caractérisé en ce que ce rétroréflecteur fait partie d'un ensemble de quatre rétroréflecteurs (41-44) situés d'un même côté d'un plan, accolés les uns aux autres par leurs facettes en ayant leurs sommets à proximité immédiate les uns des autres.

7. Véhicule spatial selon la revendication 6, caractérisé en ce que deux des facettes de chacun de ces rétroréflecteurs sont orthogonales à la troisième de ces facettes et déterminent l'une avec l'autre, en une arête dite corrigée (41A-44A), un angle différant de 90° d'un écart non nul inférieur à une minute d'arc, ces rétroréflecteurs étant implantés dans le véhicule spatial en sorte que leurs arêtes corrigées soient parallèles à l'axe de tangage.

8. Véhicule spatial selon la revendication 7, caractérisé en ce que cet ensemble de quatre rétroréflecteurs est formé d'une plaque de base (45), d'une première paroi (46) raccordée par une tranche à cette plaque de base parallèlement à l'axe de tangage en faisant avec cette plaque de base un angle différant de 90° d'une valeur égale à l'écart $\varepsilon$, et d'une seconde paroi (47) raccordée à angle droit à la plaque de base et à la première paroi.

9. Véhicule spatial selon la revendication 8, caractérisé en ce que la plaque de base est parallèle au plan des axes de roulis et de tangage.

10. Véhicule spatial selon la revendication 2, caractérisé en ce que ce dispositif de stabilisation en attitude est à action progressive.

11. Véhicule spatial selon la revendication 10, caractérisé en ce que ce dispositif de stabilisation en attitude est à action continue.

12. Véhicule spatial selon la revendication 11, caractérisé en ce que le dispositif de stabilisation en attitude comporte au moins deux mâts (21, 51, 23, 24, 55, 56) s'étendant selon deux directions du plan roulis-lacet.

13. Véhicule spatial selon la revendication 12, caractérisé en ce que le dispositif de stabilisation en attitude comporte au moins un mât (21, 51) s'étendant selon l'axe de lacet et au moins un mât (23, 24 ; 55, 56) s'étendant selon l'axe de roulis.

14. Véhicule spatial selon l'une quelconque des revendications 2 à 13, caractérisé en ce que chaque sommet est à proximité immédiate, à moins de quelques centimètres, du centre de masse du véhicule spatial.

15. Véhicule spatial selon la revendication 1, caractérisé en ce qu'il est en rotation autour d'un axe d'autorotation et en ce qu'il comporte un dispositif de stabilisation en attitude adapté à maintenir cet axe d'autorotation perpendiculaire au plan orbital, le sommet du rétroréflecteur étant à moins de 5 centimètres de cet axe d'autorotation.

16. Véhicule spatial selon la revendication 15, caractérisé en ce que ce dispositif de stabilisation en attitude est à action progressive.

17. Véhicule spatial selon la revendication 16, caractérisé en ce que ce dispositif de stabilisation en attitude comporte au moins un magnétomètre et au moins une bobine magnétique.

18. Véhicule spatial selon l'une quelconque des revendications 15 à 17, caractérisé en ce que ce rétroréflecteur fait partie d'un ensemble de rétroréflecteurs ayant des champs de vue sensiblement disjoints.

19. Véhicule spatial selon l'une quelconque des revendications 15 à 18, caractérisé en ce que la normale de chaque rétroréflecteur passe au moins approximativement par l'axe d'autorotation.

20. Véhicule spatial selon l'une quelconque des revendications 15 à 19, caractérisé en ce que ce rétroréflecteur fait partie d'un ensemble de quatre rétroréflecteurs (94-97), situés d'un même côté d'un plan transversal à l'axe d'autorotation, en ayant leurs facettes parallèles et en ayant leurs sommets à une même distance, à quelques millimètres près, de cet axe d'autorotation, cette distance étant inférieure à 5 centimètres.

21. Véhicule spatial selon la revendication 20, caractérisé en ce que deux des facettes de chacun de ces rétroréflecteurs d'un ensemble sont orthogonales à la troisième de ces facettes et déterminent l'une avec l'autre, en une arête dite corrigée (94A-97A), un angle différant de 90° d'un écart non nul inférieur à une minute d'arc, ces rétroréflecteurs étant implantés dans le véhicule spatial en sorte que leurs arêtes corrigées soient parallèles à l'axe de tangage.

22. Véhicule spatial selon la revendication 21, caractérisé en ce que chaque ensemble est formé d'une plaque de base (91) perpendiculaire à l'axe d'autorotation, et de deux parois raccordées à angle droit à cette plaque de base en formant entre elles un angle différant de 90° d'une valeur égale à l'écart $\varepsilon$.

23. Véhicule spatial selon l'une quelconque des revendications 19 à 22, caractérisé en ce que ce véhicule spatial comporte deux ensembles de quatre rétroréflecteurs longeant chacun un plan de base perpendiculaire à l'axe d'autorotation.

24. Véhicule spatial selon la revendication 23, caractérisé en ce que les plans de base de ces deux ensembles sont séparées parallèlement à l'axe d'autorotation d'une distance $\underline{d}$.

**25.** Véhicule spatial selon la revendication 24, caractérisé en ce que cette distance d est inférieure à la moitié de la dimension moyenne des ensembles (A, B) transversalement à l'axe d'autorotation.

**26.** Véhicule spatial selon la revendication 24, caractérisé en ce que cette distance d satisfait l'inégalité

$$(d/2).\sin \theta \leq t$$

si θ est l'angle maximal d'inclinaison autorisé entre l'axe d'autorotation et la normale au plan orbital, et si t est l'écart maximal autorisé entre le sommet des rétroréflecteurs et l'axe d'autorotation.

**27.** Véhicule spatial selon la revendication 1, caractérisé en ce que ce rétroréflecteur fait partie d'un ensemble d'au moins quatre rétroréflecteurs (60) ayant leurs sommets à une même distance, à moins d'un millimètre près, du centre de masse, cette distance étant inférieure à 5 centimètres.

**28.** Véhicule spatial selon la revendication 27, caractérisé en ce que la normale d'au moins chaque rétroréflecteur passe au moins approximativement par le centre de masse.

**29.** Véhicule spatial selon la revendication 27 ou la revendication 28, caractérisé en ce que ce rétroréflecteur fait partie d'un ensemble (60) de huit rétroréflecteurs ayant leurs sommets situés à une même distance, à moins d'un millimètre près, du centre de masse, cette distance étant inférieure à 5 centimètres.

**30.** Véhicule spatial selon l'une quelconque des revendications 27 à 29, caractérisé en ce que chacune des arêtes de chaque rétroréflecteur présente, vis à vis de 90°, un écart non nul inférieur à une minute d'arc, tous les écarts étant identiques à 20% près.

**31.** Véhicule spatial selon la revendication 30, caractérisé en ce que cet écart est inférieur à 10 secondes d'arc.

**32.** Véhicule spatial selon l'une quelconque des revendications 1 à 31, caractérisé en ce que ce rétroréflecteur en coin de cube est creux.

**33.** Véhicule spatial selon l'une quelconque des revendications 1 à 32, caractérisé en ce que ce véhicule spatial est un minisatellite.

**34.** Véhicule spatial selon la revendication 33, caractérisé en ce que ce véhicule spatial est un microsatellite.

**Claims**

**1.** A spacecraft for geodetic applications adapted to travel along a trajectory within an orbital plane around a planet, comprising at least one cube corner retroreflector (11; 41-44; A, B) adapted to face at least temporarily said planet and having an apex (S), a normal and three faces substantially orthogonal to one another to within one arcminute, converging into three dihedral angles forming substantially equal angles with respect to said normal, wherein the effective diameter of the cube corner is at least 3 cm, said apex being located relative to the center of mass of the spacecraft, at a distance whose projection on a line connecting the center of mass to the center of the planet remains at any time at a known value to within variations of less than 5 centimetres.

**2.** A spacecraft according to claim 1, which further comprises an attitude stabilization device adapted to stabilize the spacecraft along a yaw axis directed towards the center of the planet, a pitch axis perpendicular to the orbital plane, and a roll axis normal to the yaw and pitch axes, in the same direction as the instantaneous velocity, whereby the spacecraft is 3-axis stabilized.

**3.** A spacecraft according to claim 2, wherein said retroreflector is a single retroreflector.

**4.** A spacecraft according to claim 4, wherein two of the faces of said single retroreflector are orthogonal to the third one and form together, at a so-called corrected dihedral angle (17), an angle differing from 90° by a non-zero deviation smaller than one arcminute, said single retroreflector being installed inside the spacecraft so that said corrected dihedral angle and said normal define a plane perpendicular to the orbital plane.

**5.** A spacecraft according to claim 2, wherein said retroreflector is part of an assembly of at least two retroreflectors (41-44) having substantially separate fields of view.

**6.** A spacecraft according to claim 5, wherein said retroreflector is part of an assembly of four retroreflectors (41-44) located on the same side of a plane, joined together by their faces with their apexes closely adjacent to each other.

**7.** A spacecraft according to claim 6, wherein two of the faces of each of said retroreflectors are normal to the third face and converge together into a so-called corrected dihedral angle (41A-44A), at an angle differing from 90° by a non-zero deviation less than one arcminute, said retroreflectors being installed inside the spacecraft so that their corrected dihedral angles are parallel to the pitch axis.

8. A spacecraft according to claim 7, wherein said assembly of four retroreflectors includes a base-plate (45), a first partition (46) joined along an edge to said base-plate parallel to the pitch axis, and forming with the base-plate an angle differing from 90° by a deviation value $\varepsilon$, and a second partition (47) joined at a right angle to the base-plate and to the first partition.

9. A spacecraft according to claim 8, wherein the base-plate is parallel to the plane defined by the roll and pitch axes.

10. A spacecraft according to claim 2, wherein the attitude stabilization device is of the gradually acting type.

11. A spacecraft according to claim 10, wherein the stabilization device is of the continuously acting type.

12. A spacecraft according to claim 11, wherein the attitude stabilization device includes at least two masts (21, 51, 23, 24, 55, 56) extending along two directions in the roll-yaw plane.

13. A spacecraft according to claim 12, wherein the stabilization device includes at least one mast (21, 51) extending along the yaw axis and at least one mast (23, 24; 55, 56) extending along the roll axis.

14. A spacecraft according to any of claims 2 to 13, wherein each apex is closely adjacent, to within less than a few centimetres, to the center of mass of the spacecraft.

15. A spacecraft according to claim 1, characterized in that it rotates about a spin axis and comprises an attitude stabilization device adapted to keep this spin axis normal to the orbital plane, the apex of the retroreflector being at less than 5 centimetres from said spin axis.

16. A spacecraft according to claim 15, wherein said attitude stabilization device is of the gradually acting type.

17. A spacecraft according to claim 16, wherein said attitude stabilization device includes at least one magnetometer and at least one magnetic coil.

18. A spacecraft according to any of claims 15 to 17, wherein said retroreflector is part of an assembly of retroreflectors whose fields of view are substantially separate.

19. A spacecraft according to any of claims 15 to 18, wherein the normal of each retroreflector passes at least approximately through the axis of rotation.

20. A spacecraft according to any of claims 15 to 19, wherein said retroreflector is part of an assembly of four retroreflectors (74-77) located on the same side of a plane transverse to the spin axis, having their faces parallel and their apexes located at the same distance, to within a few millimetres, from said spin axis, said distance being less than 5 centimetres.

21. A spacecraft according to claim 20, characterized in that two of the faces of each of said retroreflectors in an assembly are normal to the third face and converge together into a so-called corrected dihedral angle (94A-97A), at an angle differing from 90° by a non-zero deviation less than one arcminute, said retroreflectors being installed in a spacecraft so that their corrected dihedral angles are parallel to the pitch axis.

22. A spacecraft according to claim 21, wherein each assembly includes a base-plate (71) normal to the spin axis, and two partitions joined at a right angle to the base-plate, converging together at an angle differing from 90° by a value equal to the deviation $\varepsilon$.

23. A spacecraft according to any of claims 19 to 22, wherein said spacecraft includes two assemblies of four retroreflectors, each lying within a base plane normal to the spin axis.

24. A spacecraft according to claim 23, wherein the base planes of said two assemblies are separated by a distance $\underline{d}$ parallel to the spin axis.

25. A spacecraft according to claim 24, wherein said distance $\underline{d}$ is less than half the average dimension of the assemblies (A and B) transversally to the spin axis.

26. A spacecraft according to claim 24, wherein said distance $\underline{d}$ follows the inequality:

$$(d/2).\sin\Theta \leqq t$$

where $\Theta$ is the maximum inclination angle allowed between the spin axis and the normal to the orbital plane, and where $\underline{t}$ is the maximum deviation allowed between the retroreflector apexes and the spin axis.

27. A spacecraft according to claim 1, characterized in that said retroreflector is part of an assembly of at least four retroreflectors (60) having their apexes at the same distance, to within one millimetre, of the center of mass, said distance being less than 5 centimetres.

28. A spacecraft according to claim 27, wherein the normal of at least each retroreflector passes at least approximately through the center of mass.

29. A spacecraft according to claim 27 or claim 28, wherein said retroreflector is part of an assembly (60) of eight retroreflectors having their apexes located at the same distance, to within one millimetre, from the center of mass, said distance being less than 5 centimetres.

30. A spacecraft according to any of claims 27 to 29, wherein each of the apexes of each retroreflector has a non-zero deviation of less than one arcminute relative to 90°, all deviations being the same to within 20%.

31. A spacecraft according to claim 30 wherein said deviation is less than 10 arcseconds.

32. A spacecraft according to any of claims 1 to 31, wherein said cube corner reflector is hollow.

33. A spacecraft according to any of claims 1 to 32, wherein said spacecraft is a minisatellite.

34. A spacecraft according to claim 33, wherein said spacecraft is a microsatellite.

**Patentansprüche**

1. Raumfahrzeug zur Verwendung in der Geodäsie, das dazu bestimmt ist, eine Trajektorie in einer Orbitalebene um einen Planeten zu durchlaufen, und das entweder einen einzelnen Rückreflektor (11) in Würfelkeilform oder mehrere Rückreflektoren (41-44; A, B) in Würfelkeilform mit im wesentlichen getrennten Gesichtsfeldern aufweist, wobei jeder Rückreflektor dazu bestimmt ist, zumindest zeitweilig in das Gesichtsfeld dieses Planeten zu kommen, und eine Spitze (S), eine Normale und drei Flächen hat, die zueinander im wesentlichen, bis auf weniger als eine Winkelminute, an drei Kanten orthogonal sind, welche im wesentlichen gleiche Winkel mit dieser Normalen einschließen, wobei der Austrittsdurchmesser dieses Würfelkeils, der durch die mittlere transversale Abmessung, am Ausgang dieses Würfelkeils gemessen, definiert ist, mindestens 3 cm beträgt, wobei diese Spitze bezüglich des Schwerpunkts dieses Raumfahrzeugs in einem Abstand liegt, dessen Projektion auf eine Verbindungslinie zwischen dem Schwerpunkt und dem Planetenzentrum, bis auf Schwankungen von weniger als fünf Zentimetern, ständig auf einem bekannten Wert bleibt.

2. Raumfahrzeug gemäß Anspruch 1, dadurch gekennzeichnet, daß es außerdem eine Lagestabilisierungsvorrichtung aufweist, die dafür ausgelegt ist, das Raumfahrzeug entlang einer Gierachse, die zum Planetenzentrum hin gerichtet ist, einer zur Orbitalebene senkrechten Nickachse und einer Rollachse, die senkrecht zur Gier- und zur Nickachse ist und dieselbe Richtung wie die Momentangeschwindigkeit hat, zu stabilisieren, wodurch das Raumfahrzeug dreiachsenstabilisiert ist.

3. Raumfahrzeug gemäß Anspruch 2, dadurch gekennzeichnet, daß dieser Rückreflektor ein einzelner ist.

4. Raumfahrzeug gemäß Anspruch 3, dadurch gekennzeichnet, daß zwei der Flächen dieses einzelnen Rückreflektors zur dritten dieser Flächen orthogonal sind und miteinander an einer korrigiert genannten Kante (17) einen Winkel festlegen, der von 90° um eine Abweichung ungleich Null, kleiner als eine Winkelminute, differiert, wobei dieser einzelne Rückreflektor so im Raumfahrzeug angeordnet ist, daß diese korrigierte Kante und diese Normale eine Ebene festlegen, die senkrecht zur Orbitalebene ist.

5. Raumfahrzeug gemäß Anspruch 2, dadurch gekennzeichnet, daß dieser Rückreflektor Teil eines Satzes von mindestens zwei Rückreflektoren (41-44) mit im wesentlichen getrennten Gesichtsfeldern ist.

6. Raumfahrzeug gemäß Anspruch 5, dadurch gekennzeichnet, daß dieser Rückreflektor Teil eines Satzes von vier Rückreflektoren (41-44) ist, die auf derselben Seite einer Ebene liegen und über ihre Flächen miteinander verbunden sind, wobei sich ihre Spitzen in unmittelbarer Nähe zueinander befinden.

7. Raumfahrzeug gemäß Anspruch 6, dadurch gekennzeichnet, daß zwei der Flächen jedes dieser Rückreflektoren zur dritten dieser Flächen orthogonal sind und miteinander an einer korrigiert genannten Kante (41A-44A) einen Winkel festlegen, der von 90° um eine Abweichung ungleich Null, kleiner als eine Winkelminute, differiert, wobei diese Rückreflektoren so im Raumfahrzeug angeordnet sind, daß ihre korrigierten Kanten parallel zur Nickachse sind.

8. Raumfahrzeug gemäß Anspruch 7, dadurch gekennzeichnet, daß dieser Satz von vier Rückreflektoren von einer Grundplatte (45), einer ersten Wand (46), die über eine Scheibe mit dieser Grundplatte parallel zur Nickachse verbunden ist und mit dieser Grundplatte einen Winkel einschließt, der von 90° um einen Wert gleich der Abweichung $\varepsilon$ dif-

feriert, und einer zweiten Wand (47) gebildet wird, die im rechten Winkel mit der Grundplatte und der ersten Wand verbunden ist.

9. Raumfahrzeug gemäß Anspruch 8, dadurch gekennzeichnet, daß die Grundplatte parallel zur Ebene der Roll- und Nickachse ist.

10. Raumfahrzeug gemäß Anspruch 2, dadurch gekennzeichnet, daß diese Lagestabilisierungsvorrichtung stufenlos ist.

11. Raumfahrzeug gemäß Anspruch 10, dadurch gekennzeichnet, daß diese Lagestabilisierungsvorrichtung kontinuierlich ist.

12. Raumfahrzeug gemäß Anspruch 11, dadurch gekennzeichnet, daß die Lagestabilisierungsvorrichtung mindestens zwei Stiele 21, 51, 23, 24, 55, 56) aufweist, die sich entlang zweier Richtungen der Roll-Gierebene erstrecken.

13. Raumfahrzeug gemäß Anspruch 12, dadurch gekennzeichnet, daß die Lagestabilisierungsvorrichtung mindestens einen Stiel (21, 51) aufweist, der sich entlang der Gierachse erstreckt, und mindestens einen Stiel (23, 24; 55, 56) aufweist, der sich entlang der Rollachse erstreckt.

14. Raumfahrzeug gemäß einem der Ansprüche 2 bis 13, dadurch gekennzeichnet, daß jede Spitze sich in unmittelbarer Nähe, weniger als einige Zentimeter entfernt, zum Schwerpunkt des Raumfahrzeugs befindet.

15. Raumfahrzeug gemäß Anspruch 1, dadurch gekennzeichnet, daß es sich um eine Autorotationsachse dreht, und dadurch, daß es eine Lagestabilisierungsvorrichtung aufweist, die dafür ausgelegt ist, diese Autorotationsachse senkrecht zur Orbitalebene zu halten, wobei die Spitze des Rückreflektors weniger als fünf Zentimeter von dieser Autorotationsachse entfernt ist.

16. Raumfahrzeug gemäß Anspruch 15, dadurch gekennzeichnet, daß diese Lagestabilisierungsvorrichtung stufenlos ist.

17. Raumfahrzeug gemäß Anspruch 16, dadurch gekennzeichnet, daß diese Lagestabilisierungsvorrichtung mindestens ein Magnetometer und mindestens eine Magnetspule aufweist.

18. Raumfahrzeug gemäß einem der Ansprüche 15 bis 17, dadurch gekennzeichnet, daß dieser Rückreflektor Teil eines Satzes von Rückreflektoren ist, die im wesentlichen getrennte Gesichtsfelder haben.

19. Raumfahrzeug gemäß einem der Ansprüche 15 bis 18, dadurch gekennzeichnet, daß die Normale jedes Rückreflektors zumindest näherungsweise durch die Autorotationsachse verläuft.

20. Raumfahrzeug gemäß einem der Ansprüche 15 bis 19, dadurch gekennzeichnet, daß dieser Rückreflektor Teil eines Satzes von vier Rückreflektoren (94-97) ist, die auf derselben Seite einer Ebene liegen, die transversal zur Autorotationsachse ist, wobei ihre Flächen parallel sind und ihre Spitzen bis auf einige Millimeter denselben Abstand von dieser Autorotationsachse haben, wobei dieser Abstand kleiner als fünf Zentimeter ist.

21. Raumfahrzeug gemäß Anspruch 20, dadurch gekennzeichnet, daß zwei der Flächen jedes dieser Rückreflektoren eines Satzes orthogonal zur dritten dieser Flächen sind und miteinander an einer korrigiert genannten Kante (94A-97A) einen Winkel festlegen, der von 90° um eine Abweichung ungleich Null, kleiner als eine Winkelminute, differiert, wobei diese Rückreflektoren so im Raumfahrzeug angeordnet sind, daß ihre korrigierten Kanten parallel zur Nickachse sind.

22. Raumfahrzeug gemäß Anspruch 21, dadurch gekennzeichnet, daß jeder Satz von einer Grundplatte (91), die senkrecht zur Autorotationsachse ist, und von zwei Wänden, die im rechten Winkel mit dieser Grundplatte verbunden sind, gebildet wird, wobei sie miteinander einen Winkel einschließen, der von 90° um einen Wert gleich der Abweichung $\varepsilon$ differiert.

23. Raumfahrzeug gemäß einem der Ansprüche 19 bis 22, dadurch gekennzeichnet, daß dieses Raumfahrzeug zwei Sätze von vier Rückreflektoren aufweist, wobei sich jeder längs einer Grundfläche erstreckt, die senkrecht zur Autorotationsachse ist.

24. Raumfahrzeug gemäß Anspruch 23, dadurch gekennzeichnet, daß die Grundflächen dieser beiden Sätze parallel zur Autorotationsachse durch einen Abstand $\underline{d}$ voneinander getrennt sind.

25. Raumfahrzeug gemäß Anspruch 24, dadurch gekennzeichnet, daß dieser Abstand $\underline{d}$ kleiner als die Hälfte der mittleren Abmessung der Sätze (A, B) transversal zur Autorotationsachse ist.

26. Raumfahrzeug gemäß Anspruch 24, dadurch gekennzeichnet, daß dieser Abstand $\underline{d}$ der Ungleichung

$$(d/2).\sin \theta \leq t$$

genügt, wenn $\theta$ der maximal zulässige Neigungswinkel zwischen der Autorotationsachse und der Normalen zur Orbitalebene ist und wenn $\underline{t}$ die maximal zulässige Abweichung zwischen der Spitze der Rückreflektoren und der Autorotationsachse ist.

27. Raumfahrzeug gemäß Anspruch 1, dadurch gekennzeichnet, daß dieser Rückreflektor Teil eines Satzes von mindestens vier Rückreflektoren (60) ist, deren Spitzen bis auf weniger als einen Millimeter denselben Abstand vom Schwerpunkt haben, wobei dieser Abstand kleiner als fünf Zentimeter ist.

28. Raumfahrzeug gemäß Anspruch 27, dadurch gekennzeichnet, daß die Normale mindestens jedes Rückreflektors zumindest näherungsweise durch den Schwerpunkt verläuft.

29. Raumfahrzeug gemäß Anspruch 27 oder Anspruch 28, dadurch gekennzeichnet, daß dieser Rückreflektor Teil eines Satzes (60) von acht Rückreflektoren ist, deren Spitzen bis auf weniger als einen Millimeter im selben Abstand vom Schwerpunkt gelegen sind, wobei dieser Abstand kleiner als fünf Zentimeter ist.

30. Raumfahrzeug gemäß einem der Ansprüche 27 bis 29, dadurch gekennzeichnet, daß jede der Kanten jedes Rückreflektors gegenüber 90° eine Abweichung ungleich Null, kleiner als eine Winkelminute, zeigt, wobei alle Abweichungen bis auf 20% identisch sind.

31. Raumfahrzeug gemäß Anspruch 30, dadurch gekennzeichnet, daß diese Abweichung kleiner als zehn Winkelsekunden ist.

32. Raumfahrzeug gemäß einem der Ansprüche 1 bis 31, dadurch gekennzeichnet, daß dieser Rückreflektor in Würfelkeilform hohl ist.

33. Raumfahrzeug gemäß einem der Ansprüche 1 bis 32, dadurch gekennzeichnet, daß dieses Raumfahrzeug ein Minisatellit ist.

34. Raumfahrzeug gemäß Anspruch 33, dadurch gekennzeichnet, daß dieses Raumfahrzeug ein Mikrosatellit ist.

Fig. 1

Fig.2

Fig.3

Fig.7

Fig.4

Fig.5

Fig.6